(19) Europäisches Patentamt
European Patent Office
Office européen des brevets

(11) **EP 2 158 950 A2**

(12) **EUROPEAN PATENT APPLICATION**

(43) Date of publication:
**03.03.2010 Bulletin 2010/09**

(51) Int Cl.:
***A63F 13/10*** *(2006.01)*

(21) Application number: **09166631.3**

(22) Date of filing: **28.07.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **28.07.2008 JP 2008194220**

(71) Applicant: **NAMCO BANDAI Games Inc.**
**Shinagawa-ku**
**Tokyo 140-8590 (JP)**

(72) Inventors:
• **Kumakura, Takashi**
  **Tokyo 140-8590 (JP)**
• **Higashino, Taichi**
  **Tokyo 140-8590 (JP)**
• **Ikeda, Shinichi**
  **Tokyo 140-8590 (JP)**

(74) Representative: **Emerson, Peter James et al**
**Page Hargrave**
**Whitefriars**
**Lewins Mead**
**Bristol BS1 2NT (GB)**

(54) **Image generation device, and image generation method**

(57) An image generation device does not set a selected part object together with a part object that has been already set as an element of a model object as elements of a model object when the category of the selected part object is designated by designation information of the part object that has been already set as an element of the model object and the category of the part object that has been already set as an element of the model object is designated by designation information of the selected part object.

FIG.1

EP 2 158 950 A2

**Description**

BACKGROUND OF THE INVENTION

The present invention relates to an image generation device, and an image generation method.

An image generation device (game device) that generates an image viewed from a virtual camera (given viewpoint) in an object space (virtual three-dimensional space) has been known. Such an image generation device is very popular as a system that allows experience of virtual reality.

An image generation device that allows the player to arbitrarily customize the player's character has been known (refer to JP-A-2006-268406).

According to a related-art image generation device, when using part objects having a special shape, a polygon that forms one part object may overlap a polygon that forms another part object so that the image of the model object may become strange.

In particular, when the part objects are classified into a plurality of categories determined corresponding to the parts (e.g., head, neck, and arm) of the model object and selection of one part object is received corresponding to each category, the polygons that form the part objects may overlap when the part objects that belong to different categories interfere with each other (e.g., the part objects are large or long) so that a strange image may be generated. On the other hand, when the part object is designed so that the part object is placed inside the part of the model object corresponding to the category, the design of each part object that belongs to each category becomes uniform (i.e., various part objects that differ in shape cannot be provided).

SUMMARY

According to a first aspect of the invention, there is provided an image generation device that generates an image of a model object formed by a plurality of part objects, the image generation device comprising:

a storage section that stores the plurality of part objects, each of the plurality of part objects being classified into one of a plurality of categories;
a reception section that receives selection of a part object among the plurality of part objects for each of the plurality of categories;
a setting section that sets the selected part object as an element of the model object; and
a drawing section that generates the image of the model object,
the storage section storing a category that differs from a category of a given part object among the plurality of part objects as designation information of the given part object; and
when a category of a specific part object that has been already set as an element of the model object has been stored as the designation information of the selected part object and a category of the selected part object has been stored as the designation information of the specific part object, the setting section setting the selected part object as an element of the model object in place of the specific part object, or restricting setting of the selected part object.

According to a second aspect of the invention, there is provided an image generation method that generates an image of a model object formed by a plurality of part objects, the image generation method, performed by an image generation device having a processor, comprising:

storing the plurality of part objects, each of the plurality of part objects being classified into one of a plurality of categories;
receiving selection of a part object among the plurality of part objects for each of the plurality of categories;
setting the selected part object as an element of the model object;
generating the image of the model object;
storing a category that differs from a category of a given part object among the plurality of part objects as designation information of the given part object; and
when a category of a specific part object that has been already set as an element of the model object has been stored as the designation information of the selected part object and a category of the selected part object has been stored as the designation information of the specific part object, setting the selected part object as an element of the model object in place of the specific part object, or restricting setting of the selected part object.

BRIEF DESCRIPTION OF THE SEVERAL VIEWS OF THE DRAWING

FIG. 1 is a functional block diagram of an image generation device according to one embodiment of the invention.

FIG. 2 is a diagram illustrating a slot.

FIG. 3 is a diagram illustrating a slot.

FIG. 4 illustrates a table illustrating the relationship among a category, a part object, and the like.

FIG. 5 illustrates an example of a part object selection screen according to one embodiment of the invention.

FIGS. 6A to 6C illustrate image examples.

FIGS. 7A and 7B are diagrams for describing the part object designation relationship.

FIG. 8 is a diagram for describing the part object designation relationship.

FIG. 9 is a flowchart illustrating an example of a process according to one embodiment of the invention.

DETAILED DESCRIPTION OF THE EMBODIMENT

The invention may provide an image generation device, and an image generation method that generate a natural image of a model object when customizing the model object by combining a plurality of part objects that are designed arbitrarily.

(1) According to one embodiment of the invention, there is provided an image generation device that generates an image of a model object formed by a plurality of part objects, the image generation device comprising:

a storage section that stores the plurality of part objects, each of the plurality of part objects being classified into one of a plurality of categories;

a reception section that receives selection of a part object among the plurality of part objects for each of the plurality of categories;

a setting section that sets the selected part object as an element of the model object; and

a drawing section that generates the image of the model object, the storage section storing a category that differs from a category of a given part object among the plurality of part objects as designation information of the given part object; and

when a category of a specific part object that has been already set as an element of the model object has been stored as the designation information of the selected part object and a category of the selected part object has been stored as the designation information of the specific part object, the setting section setting the selected part object as an element of the model object in place of the specific part object, or restricting setting of the selected part object.

According to the above embodiments, when the image of the model object may become strange as a result of combining the selected part object with the part object that belongs to a different category, such a situation can be prevented by storing the combination target category in advance as the designation information of each part object. According to the above embodiments, when the category of a already-set specific part object is not stored as the designation information of the selected part object, or when the category of the selected part object is not stored as the designation information of the specific part object, the selected part object and the specific part object are both set as elements of the model object. Therefore, the combination of the part objects can be restricted to a minimum extent.

According to the above embodiments, even if the part object belonging to one category may interfere with a given part object belonging to another category, the part objects are set as elements of the model object when the part object belonging to the other category does not interfere with a given part object belonging to the one category. When the part object belonging to one category may interfere with a given part object belonging to another category and the part object belonging to the other category may also interfere with a given part object belonging to the one category, one of the part objects is set as an element of the model object. According to the above embodiments, since one of the part objects is not set as an element of the model object when the part objects may interfere with each other, the combination of the part objects can be restricted to a minimum extent so that various part objects can be combined.

(2) In the above image generation device,

when categories of a plurality of specific part objects have been stored as the designation information of the selected part object and the category of the selected part object has been stored as the designation information of one specific part object among the plurality of specific part objects, the setting section may set the selected part object as an element of the model object in place of the specific part object among the plurality of specific part objects, or may restrict setting of the selected part object.

According to the above embodiment, when a part object belonging to the first category and a part object belonging to the second category have been already set as elements of a model object and a part object belonging to the third category is additionally selected, if the part object belonging to the first category and the part object belonging to the third category may interfere with each other and the part object belonging to the second category and the part object belonging to the third category do not interfere with each other, the part object belonging to the third category is set as an element of the model object instead of the part object belonging to the first category, or, the setting of the part object belonging to the first category is maintained and the setting of the part object belonging to the third category is restricted. The setting of the part object belonging to the second category is maintained. Therefore, according to the above embodiment, the combination of the part objects is restricted to a minimum extent so that various part objects can be combined.

(3) According to one embodiment of the invention, there is provided an image generation method that generates an image of a model object formed by a plurality of part objects, the image generation method, performed by an image generation device having a processor, comprising:

storing the plurality of part objects, each of the plurality of part objects being classified into one of a plurality of categories;

receiving selection of a part object among the plurality of part objects for each of the plurality of categories;

setting the selected part object as an element of the model object;

generating the image of the model object;

storing a category that differs from a category of a given part object among the plurality of part objects as designation information of the given part object; and

when a category of a specific part object that has been already set as an element of the model object has been stored as the designation information of the selected part object and a category of the selected part object has been stored as the designation information of the specific part object, setting the selected part object as an element of the model object in place of the specific part object, or restricting setting of the selected part object.

Embodiments of the invention will now be described below. Note that the embodiments described below do not unduly limit the scope of the invention as stated in the claims. Also, not all the elements described below should be taken as essential requirements of the invention.

1. Configuration

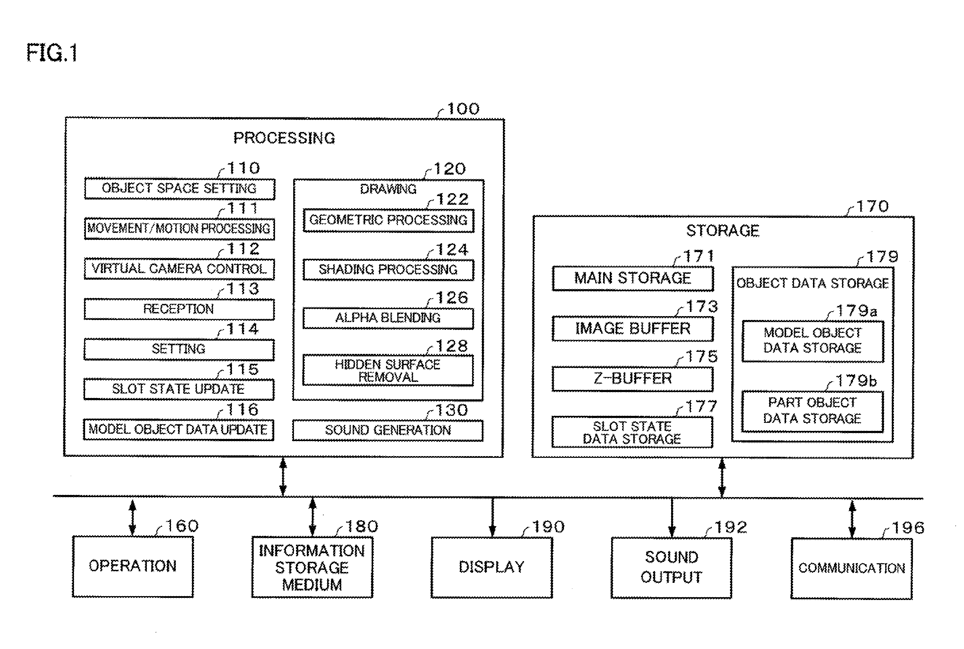

FIG. 1 is a functional block diagram of an image generation device (game device or terminal) according to one embodiment of the invention. Note that the image generation device according to this embodiment may have a configuration in which some of the elements in FIG. 1 are omitted.

An operation section 160 allows a player to input operational data of a player's object (player's character operated by the player). The function of the operation section 160 may be implemented by a lever, a button, a steering wheel, a microphone, a touch panel type display, a casing, or the like.

A storage section 170 serves as a work area for a processing section 100, a communication section 196, and the like. The function of the storage section 170 may be implemented by a RAM (VRAM) or the like.

A slot state data storage section 177 stores slot state data. The term "slot state data" refers to data that specifies the presence or absence of part object data disposed in each slot and the type of part object data disposed in each slot. Each part object is formed by one or more pieces of part object data. Each piece of part object data is associated with one of the slots. Specifically, the slot state data refers to information for managing the part object data disposed in each slot (i.e., in slot units).

An object data storage section 179 stores object data. The object data storage section 179 according to this embodiment includes a model object data storage section 179a and a part object data storage section 179b.

The model object data storage section 179a stores model object data that is formed by a plurality of part objects. The model object data storage section 179a according to this embodiment includes a plurality of buffers in order to store a plurality of model objects, and stores the model object data in each buffer.

The part object data storage section 179b stores a plurality of part objects. Each of the part objects is classified into one of a plurality of categories and stored in the part object data storage section 179b.

The term "category" refers to an attribute for each part such as a head, a neck, or an arm that forms the model object.

Designation information is stored in association with a given part object among the plurality of part objects stored in the part object data storage section 179b. The designation information designates a category that differs from the category of the given part object.

The category of the part object refers to the category to which the part object belongs. The designation information designates a category of another part object that may adversely affect an image if set together with the part object having that designation information as the element of the model object. Specifically, a plurality of part objects that differ in category may restrict setting together (not be set together).

In this embodiment, the part object may be downloaded from a server based on input information (e.g., operation information from the operation section 160) input by the player, and stored in the part object data storage section 179b and an information storage medium 180.

The information storage medium 180 (computer-readable medium) stores a program, data, and the like. The function of the information storage medium 180 may be implemented by an optical disk (CD or DVD), a magneto-optical disk (MO), a magnetic disk, a hard disk, a magnetic tape, a memory (ROM), a memory card, or the like.

The processing section 100 performs various processes according to this embodiment based on a program (data) stored in the information storage medium 180.

Specifically, a program that causes a computer to function as each section according to this embodiment (i.e., a program that causes a computer to execute the process of each section) is stored in the information storage medium 180. A player's personal data, game save data, and the like may be stored in the information storage medium 180.

In this embodiment, the model object data and the part object data may be stored in the information storage medium 180, and loaded into the model object data storage section 179a and the part object data storage section 179b, if necessary.

A display section 190 outputs an image generated according to this embodiment. The function of the display section 190 may be implemented by a CRT, an LCD, a touch panel display, a head mount display (HMD), or the like. A sound output section 192 outputs sound generated according to this embodiment. The function of the sound output section 192 may be implemented by a speaker, a headphone, or the like.

The communication section 196 performs various types of control for communicating with the outside (e.g., host device or another image generation device). The function of the communication section 196 may be implemented by hardware such as a processor or a communication ASIC, a program, and the like.

A program (data) that causes a computer to function as each section according to this embodiment may be downloaded from a server through a network, and stored in the storage section 170 or the information storage medium 180. The scope of the invention also includes the program stored in a storage section of the server.

The processing section 100 (processor) performs a game process, an image generation process, a sound generation process, and the like based on operation data from the operation section 160, a program, and the like. The game process includes starting the game when game start conditions have been satisfied, proceeding with the game, disposing an object such as a character or a map, displaying an object, calculating the game result, finishing the game when game end conditions have been satisfied, and the like. The processing section 100 performs various processes using a main storage section 171 of the storage section 170 as a work area. The function of the processing section 100 may be implemented by hardware such as a processor (e.g., CPU or DSP) or an ASIC (e.g., gate array), or a program.

The processing section 100 includes an object space setting section 110, a movement/motion processing section 111, a virtual camera control section 112, a reception section 113, a setting section 114, a slot state update section 115, a model object data update section 116, a drawing section 120, and a sound generation section 130. Note that some of these sections may be omitted.

The object space setting section 110 disposes an object (i.e., an object formed by a primitive such as a polygon, a free-form surface, or a subdivision surface) that represents a display object (e.g., model object, character, building, stadium, car, tree, pillar, wall, or map (topography)) in an object space. Specifically, the object space setting section 110 determines the position and the rotational angle (synonymous with orientation or direction) of the model object in a world coordinate system, and disposes the object at the determined position (X, Y, Z) and the determined rotational angle (rotational angles around X, Y, and Z axes).

The movement/motion processing section 111 calculates the movement/motion (movement/motion simulation) of the object (e.g., character, car, or airplane). Specifically, the movement/motion processing section 111 causes the object to move or make a motion (animation) in the object space based on the operation data input by the player using the operation section 160, a program (movement/motion algorithm), various types of data (motion data), and the like. More specifically, the movement/motion processing section 111 performs a simulation process that sequentially calculates movement information (position, rotational angle, speed, or acceleration) and motion information (position or rotational angle of each part object) of the object every frame (1/60th of a second). Note that the term "frame" refers to a time unit when performing an object movement/motion process (simulation process) or an image generation process.

The virtual camera control section 112 controls a virtual camera (viewpoint) for generating an image viewed from a given (arbitrary) viewpoint in the object space. Specifically, the virtual camera control section 112 controls the position (X, Y, Z) or the rotational angle (rotational angles around X, Y, and Z axes) of the virtual camera (i.e., controls the viewpoint position or the line-of-sight direction).

For example, when photographing the object (e.g., character, ball, or car) from behind using the virtual camera, the virtual camera control section 112 controls the position or the rotational angle (direction) of the virtual camera so that the virtual camera follows a change in position or rotation of the object. In this case, the virtual camera control section 112 may control the virtual camera based on information (e.g., position, rotational angle, or speed) of the object obtained by the movement/motion processing section 111. Alternatively, the virtual camera control section 112 may rotate the virtual camera by a predetermined rotational angle, or may move the virtual camera along a predetermined path. In this case, the virtual camera control section 112 controls the virtual camera based on virtual camera data that specifies the position (moving path) or the rotational angle of the virtual camera. When a plurality of virtual cameras (viewpoints) are provided, the virtual camera control section 112 performs the above-described control process for each virtual camera.

The reception section 113 receives selection of the part object for each category. Specifically, the reception section 113 receives selection of one category from among a plurality of categories displayed on the screen based on input information input by the player, and receives selection of one part object among a plurality of part objects belonging to the selected category. Specifically, according to this embodiment, selection of one part object belonging to one category is received based on input information input by the player.

The setting section 114 sets the selected part object as an element of the model object.

When the category of a specific part object that has been set as an element of the model object has been stored as the designation information of the selected part object and the category of the selected part object has been stored as the designation information of the specific part object, the setting section 114 according to this embodiment sets the selected part object as an element of the model object in place of the specific part object, or, the setting of the selected part object is restricted (and maintains the specific part object as an element of the model object). Specifically, when the category of the specific part object has been stored as the designation information of the selected part object and the category of the selected part object has been stored as the designation information of the specific part object, the selected part object and the already-set part object cannot be set together as elements of the model object.

When categories of a plurality of specific part objects that have been set as elements of the model object have been stored as the designation information of the selected part object, the setting section 114 according to this embodiment determines whether or not the category of the selected part object has been stored as the designation information of each of the plurality of specific part objects. When the category of the selected part object has been stored as the designation information of a specific part object among the plurality of specific part objects, the setting section 114 sets the selected part object as an element of the model object in place of the specific part object for which the category of the selected part object has been stored as the designation information, or, restricts setting of the selected part object and maintains the specific part object as an element of the model object.

When the selected part object is set to be an element of the model object and another part object data has been disposed in the slot that corresponds to each of one or more pieces of part object data that forms the selected part object, the slot state update section 115 determines whether or not to update the slot state data based on part object priority information that determines the disposition priority of each part object data, and updates the slot state data stored in the slot state data storage section 177 based on the determination result. Specifically, the slot state update section 115 disposes (sets) the part object data for each slot.

The term "priority information" refers to information for disposing (setting) the part object data with a higher disposition priority (i.e., higher-order part object data) in the slot preferentially over the part object data with a lower disposition priority (i.e., lower-order part object data). The priority information is set for each category.

The model object data update section 116 updates the model object data stored in the model object data storage section 179a based on the slot state data stored in the slot state data storage section 177.

Specifically, the model object data update section 116 may read the part object data disposed in the slot for which the slot state data has been updated from the part object data storage section 179b, and store the part object data in a first buffer (update buffer) of the model object data storage section 179a. The model object data update section 116 may copy the part object data disposed in the slot for which the slot state data has not been updated to the first buffer from a second buffer of the model object data storage section 179a that stores the model object data that has been disposed. Note that the model object data update section 116 may read the part object data disposed in the slot for which the slot state data has not been updated from the part object data storage section 179b, and store the part object data in the first buffer.

The drawing section 120 performs a drawing process based on the results of various processes (game process) performed by the processing section 100 to generate an image, and outputs the generated image to the display section 190. When generating a three-dimensional game image, the drawing section 120 performs a geometric process such as coordinate transformation (world coordinate transformation or camera coordinate transformation), clipping, or perspective transformation, and creates drawing data (e.g., position coordinates of primitive vertices, texture coordinates, color data, normal vector, or alpha value) based on the processing results. The drawing section 120 draws the object (one or more primitives) subjected to perspective transformation (geometric process) in an image buffer 173 (i.e., a buffer that can store image information in pixel units (e.g., frame buffer or intermediate buffer (work buffer)); VRAM) based on the drawing data (object data). The drawing section 120 thus generates an image viewed from the virtual camera (given viewpoint) in the object space. When a plurality of virtual cameras (viewpoints) are provided, the drawing section 120 performs the drawing process so that images viewed from the virtual cameras can be displayed on one screen as divided images.

The drawing section 120 includes a geometric processing section 122, a shading processing section 124, an alpha blending section 126, and a hidden surface removal section 128.

The geometric processing section 122 performs the geometric process on the object. Specifically, the geometric processing section 122 performs the geometric process such as coordinate transformation, clipping, perspective transformation, and light source calculations. The object data (e.g., object's vertex position coordinates, texture coordinates, color data (luminance data), normal vector, or alpha value) after the geometric process (perspective transformation) is stored in the object data storage section 179.

The shading processing section 124 performs a shading process that shades in the object. Specifically, the shading processing section 124 adjusts the luminance of the drawing pixel of the object based on the results (shade information) of light source calculations performed by the geometric processing section 122. The shading processing section 124 may perform light source calculations in place of the geometric processing section 122. The shading processing section 124 may subject the object to flat shading or smooth shading (e.g., Gouraud shading or Phong shading) as the shading process.

The alpha blending section 126 performs a translucent blending process (e.g., normal alpha blending, additive alpha blending, or subtractive alpha blending) based on the alpha($\alpha$) value (A value). When performing normal alpha ($\alpha$) blending, the alpha blending section 126 performs a process shown by the following expressions (1) to (3).

$$R_Q = (1 - \alpha) \times R_1 + \alpha \times R_2 \qquad (1)$$

$$G_Q = (1 - \alpha) \times G_1 + \alpha \times G_2 \qquad (2)$$

$$B_Q = (1 - \alpha) \times B_1 + \alpha \times B_2 \qquad (3)$$

When performing additive alpha blending, the alpha blending section 126 performs a process shown by the following expressions (4) to (6).

$$R_Q = R_1 + \alpha \times R_2 \qquad (4)$$

$$G_Q = G_1 + \alpha \times G_2 \qquad (5)$$

$$B_Q = B_1 + \alpha \times B_2 \qquad (6)$$

When performing subtractive alpha blending, the alpha blending section 126 performs a process shown by the following expressions (7) to (9).

$$R_Q = R_1 - \alpha \times R_2 \qquad (7)$$

$$G_Q = G_1 - \alpha \times G_2 \qquad (8)$$

$$B_Q = B_1 - \alpha \times B_2 \qquad\qquad (9)$$

$R_1$, $G_1$, and $B_1$ represent the RGB components of the image (original image) that has been drawn in the image buffer 173, and $R_2$, $G_2$, and $B_2$ represent the RGB components of the image to be drawn in the image buffer 173. $R_Q$, $G_Q$, and $B_Q$ represent the RGB components of the image obtained by alpha blending. Note that the alpha value is information that can be stored in association with each pixel (texel or dot), such as additional information other than the color information. The alpha value may be used as mask information, translucency (equivalent to transparency or opacity), bump information, or the like.

The hidden surface removal section 128 performs a hidden surface removal process by a Z-buffer method (depth comparison method or Z-test) using a Z-buffer 175 (depth buffer) that stores the Z-value (depth information) of the drawing pixel. Specifically, the hidden surface removal section 128 refers to the Z-value stored in the Z-buffer 175 when drawing the drawing pixel corresponding to the primitive of the object. The hidden surface removal section 128 compares the Z-value stored in the Z-buffer 175 with the Z-value of the drawing pixel of the primitive. When the Z-value of the drawing pixel is the Z-value in front of the virtual camera (e.g., a small Z-value), the hidden surface removal section 128 draws the drawing pixel and updates the Z-value stored in the Z-buffer 175 with a new Z-value.

The sound generation section 130 performs a sound generation process based on the results of various processes performed by the processing section 100 to generate game sound such as background music (BGM), effect sound, or voice, and outputs the generated game sound to the sound output section 192.

The image generation device according to this embodiment may be an image generation device dedicated to a single-player mode that allows only one player to play the game, or may be an image generation device provided with a multi-player mode that allows a plurality of players to play the game.

When a plurality of players play the game, the game image and the game sound provided to the players may be generated by one terminal.

The image generation device according to this embodiment may exchange data (e.g., input information) with one or more image generation devices connected through a network (transmission line or communication channel) to implement an online game.

2. Outline of method according to this embodiment

2-1. Slot

In this embodiment, the part object data is disposed (set) in each of a plurality of slots that form the model object.

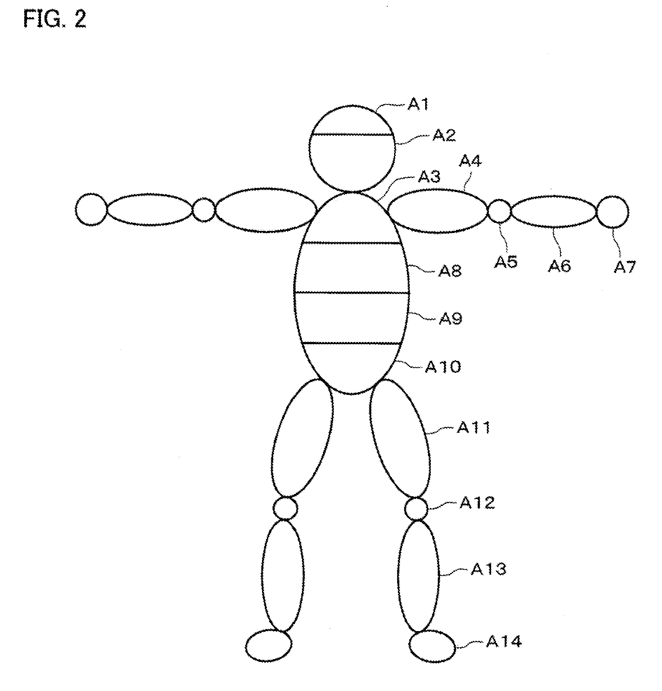

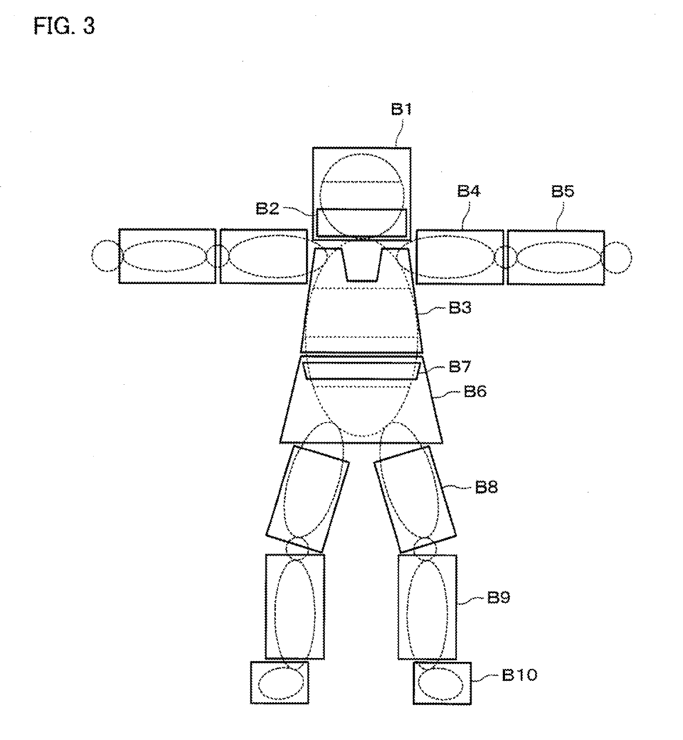

The term "slot" refers to a part object data disposition space set in a model coordinate system, and corresponds to a component part of the model object. In this embodiment, body slots A1 to A14 (first slots in a broad sense) in FIG. 2 that correspond to the component parts of a human body, and item slots B1 to B10 (second slots in a broad sense) in FIG. 3 that correspond to the component parts of an ornament attached to the human body, are provided.

In FIG. 2, fourteen body slots A1 to A14 correspond to the component parts of the human body. For example, the arm is made up of four body slots A4 to A7. The body slot A4 corresponds to the upper arm, the body slot A5 corresponds to the elbow, the body slot A6 corresponds to the forearm, and the body slot A7 corresponds to the hand, for example. A part object such as a shirt or a jacket can also be disposed in the body slots A1 to A14 instead of the part object corresponding to the component part of the human body. For example, parts of a short sleeve T-shirt can be formed using the body slots A3, A4, A8, and A9, and parts of a long sleeve T-shirt can be formed using the body slots A3 to A6, A8, and A9.

In FIG. 3, the item slots B1 to B10 are disposed to overlap one or more body slots. The item slots B1 to B10 are used when it is necessary to dispose a plurality of pieces of part object data in layers, such as when dressing the model object in two or more suits of clothes one over the other. In other words, the item slots B1 to B10 may be referred to as overlapping slots. For example, the item slot B2 is used when disposing a beard on the face. Full armor may be set using the item slots B1, B3 to B6, and B8 to B10. The part object data that is given disposition priority over the part object data disposed in the body slots A1 to A14 is basically disposed in the item slots B1 to B10. The part object data disposed in one item slot may be given disposition priority over the part object data disposed in another item slot. For example, the item slot B7 is used when the model object wears a belt over a uniform or wears a belted skirt. The part object data that is given disposition priority over the part object data disposed in the item slot B8 is disposed in the item slot B7.

According to this embodiment, an image of a model object that wears a plurality of part objects in layers can be generated by providing the body slots A1 to A14 and the item slots B1 to B10 and disposing the part object data in each slot to form a model object. An image in which a joint is observed through the opening in armor can be generated by disposing the part object data in the item slots B1 to B10 and disposing the part object data in the body slots A1 to A14 in layers, for example.

2-2. Categorization method

In this embodiment, each part object is stored in the part object data storage section 179b in association with one of a plurality of categories.

Specifically, one or more pieces of part object data (slot-unit part object data) disposed in one or more body slots or item slots are stored in the part object data storage section 179b in association with one category.

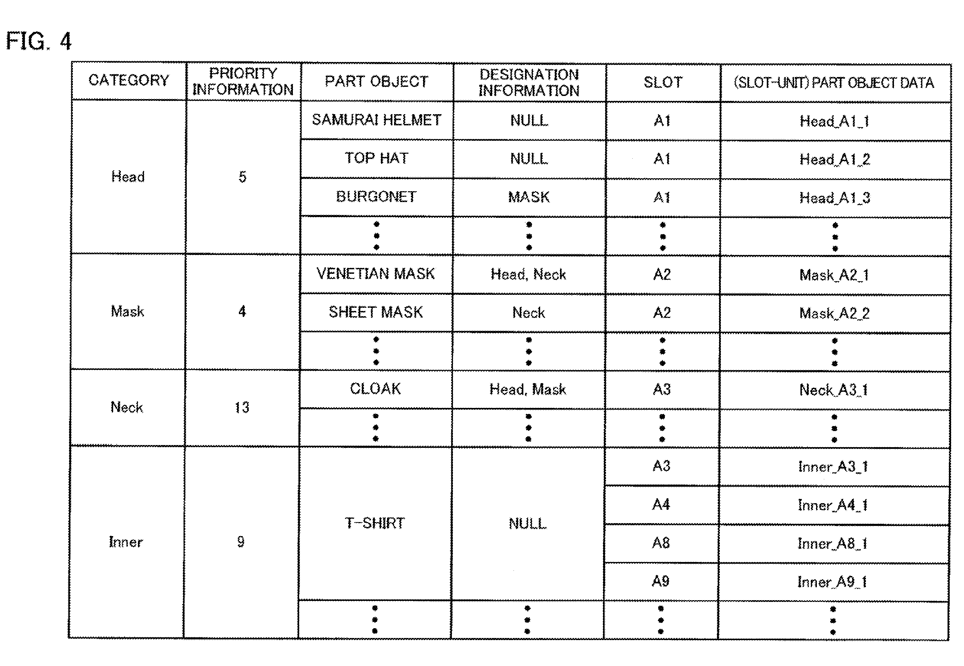

The relationship between the part objects is described below with reference to FIG. 4. For example, part objects "samurai helmet", "burgonet", and "top hat" are classified into a category "Head" that determines the upper part of the head of the model object, and disposed in the body slot A1.

A part object "Venetian mask" is classified into a category "Mask" that determines the mask of the model object, and disposed in the body slotA2.

In this embodiment, the priority information that indicates the disposition priority is set in advance for each category, as illustrated in FIG. 4. The priority information is used when updating the slot state data that determines the part objects disposed in the body slots A1 to A14 or the item slots B1 to B10. Note that the slot state data may be exceptionally updated regardless of the priority information.

In this embodiment, the part object data (slot-unit part object data) corresponding to each slot is stored in the part object data storage section 179b, as illustrated in FIG. 4. For example, part object data Inner_A3_1 corresponding to the slot A3, part object data Inner_A4_1 corresponding to the slot A4, part object data Inner_A8_1 corresponding to the slot A8, and part object data Inner_A9_1 corresponding to the slot A9 are stored in the part object data storage section 179b for a part object "T-shirt" in a category "Inner".

In this embodiment, when disposing the higher-order part object data, disposition clear information for clearing the setting of the slot corresponding to the lower-order part object data may be stored.

The disposition clear information specifies the slot for which the part object data is hidden behind the part object data disposed in the item slot and need not be disposed when the part object data is disposed in the body slot (e.g., A8) and the item slot (e.g., B3) in layers. When updating the slot state data, the part object data is not disposed in the slot specified by the disposition clear information, or the part object data that has been disposed is cleared based on the disposition clear information.

2-3. Selection of part object

In this embodiment, selection of the part object from each category is received based on input information input by the player, and the selected part object is set to be an element of the model object.

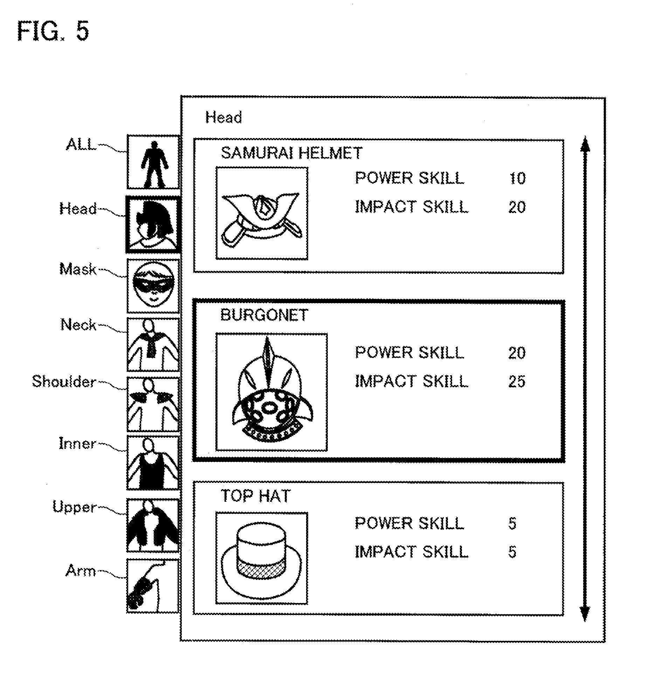

FIG. 5 illustrates an example of a part object selection screen. In this embodiment, selection of one of a plurality of categories is received, and selection of one of a plurality of part objects in the selected category is received, for example. FIG. 5 illustrates an example of an image in which the category "Head" is selected from a plurality of categories, and the part object "burgonet" is selected from a plurality of part objects that belong to the category "Head".

In this embodiment, a parameter (e.g., power skill value and impact skill value) used for game calculations is set for each part object, and a skill that gives an advantage to the player can be set based on the parameter. This makes it possible to change the part objects on the model object taking account of the strategy of the game.

2-4. Slot state data update process

In this embodiment, the part object data of the part object that forms the model object is disposed in the slot by a slot state data update process.

In this embodiment, it is determined that the slot state data of the slot corresponding to the part object data of the part object selected by the player must be updated when no part object is disposed in the slot that corresponds to the part object selected by the player, and the part object data of the part object selected by the player is disposed in the slot that corresponds to the part object data of the part object selected by the player to update the slot state data.

For example, when the player has selected the part object "top hat" from a plurality of part objects that belong to the category "Head" and the part object in the category "Head" is not disposed, the part object data of the part object "top hat" is disposed to update the slot state data.

In this embodiment, when the part object data of the part object that is other than the part object selected by the player and belongs to the same category as the part object selected by the player has been disposed, the part object data of the part object selected by the player is disposed in place of the part object data of the part object other than the part object selected by the player to update the slot state data.

For example, when the player has selected the part object "top hat" from the part objects that belong to the category "Head" and the part object data of the part object "samurai helmet" that belongs to the category "Head" has been disposed in the slot, the part object data of the part object "top hat" is disposed in place of the part object data of the part object "samurai helmet" to update the slot state data.

In this embodiment, when the part object data of the part object that belongs to a category differing from the category of the part object data of the part object selected by the player has been disposed in the slot that corresponds to the part object data of the part object selected by the player, the disposition priorities of the categories determined based on the priority information are compared in slot units to update the slot state data.

Note that whether or not to update the slot state data is determined in slot units corresponding to the part object data of the part object even when a plurality of slots are designated for the part object, and the slot state data is updated in slot units. This minimizes the amount of object data that forms the model object while appropriately dressing the model object in two or more suits of clothes one over the other.

Specifically, the slot state data may be updated as described in (A) to (C) given below.

(A) When the part object data of another part object (i.e., a part object that belongs to a category differing from the category of the part object data of the part object selected by the player) has been disposed in the slot that corresponds to the part object data of the part object selected by the player and the part object data of the part object selected by the player is given a disposition priority higher than that of the other part object, it is determined that the slot state data must be updated, and the part object data of the part object selected by the player is disposed in the slot in place of the part object data of the other part object to update the slot state data.

(B) When the part object data of another part object (i.e., a part object that belongs to a category differing from the category of the part object data of the part object selected by the player) has been disposed in the slot that corresponds to the part object data of the part object selected by the player and the part object data of the part object selected by the player is given a disposition priority lower than that of the other part object, it is determined that the slot state data should not be updated. In this case, the part object data of the other part object is continuously disposed without updating the slot state data of the slot.

(C) When the part object data of another part object (i.e., a part object that belongs to a category differing from the category of the part object data of the part object selected by the player) has been disposed in the slot that corresponds to the part object data of the part object selected by the player and the part object data of the part object selected by the player is given a disposition priority equal to that of the other part object, the part object data of the part object selected by the player is disposed in the slot in place of the part object data of the other part object to update the slot state data.

3. Part object setting method

3-1. Problem that occurs when setting a plurality of part objects that differ in category as element of model object

In this embodiment, a plurality of part objects that differ in shape and size are provided and classified into categories corresponding to the parts of the model object. However, since the category is determined so that the player can easily select the part object, the part object belonging to one category may have a shape or size that interferes with the part of the model object corresponding to another category. As a result, a strange image may be generated when setting a plurality of part objects that differ in category as an element of the model object.

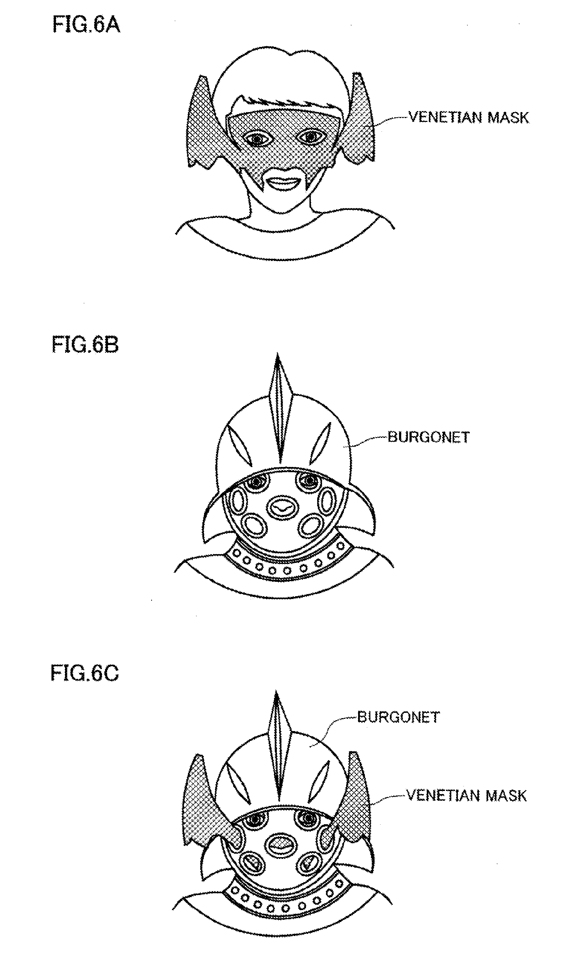

FIG. 6A illustrates an example of an image generated when the part object "Venetian mask" belonging the category "Mask" is set as an element of the model object.

FIG. 6B illustrates an example of an image generated when the part object "burgonet" belonging to the category "Head" is set as an element of the model object.

FIG. 6C illustrates an example of an image generated when the part object "Venetian mask" belonging to the category "Mask" and the part object "burgonet" belonging to the category "Head" are set as elements of the model object.

For example, even if the part object data of the part object "Venetian mask" corresponds to the slot A2 and the part object data of the part object "burgonet" corresponds to the slot A1, when the part object data of the part object "Venetian mask" is modeled so as to interfere with the slot A1 and the part object data of the part object "burgonet" is modeled so as to interfere with the slot A2, the polygon that forms the part object "Venetian mask" overlaps the polygon that forms the part object "burgonet" so that a strange image is generated, as illustrated in FIG. 6C.

3-2. Method of restricting setting of a plurality of part obj ects

In order to prevent a situation in which a strange image is generated when a plurality of part objects that differ in category are set together as elements of the model object, this embodiment employs a method of restricting setting a plurality of part objects by using designation information previously stored in association with each of the part objects. This prevents a situation in which a strange image is generated.

The designation information stored in association with a part object designates a category of another part object that may adversely affect an image if set together. Specifically, setting the part object together with the other part object whose category is designated by the designation information of the part object may be restricted.

For example, when the part object "Venetian mask" belongs to the category "Mask" and a strange image is generated when the part object "Venetian mask" and a specific part object that belongs to the category "Head" are set together as elements of the model object, the category "Head" is stored as the designation information of the part object "Venetian mask".

Specifically, since a strange image is generated when the part object "Venetian mask" that belongs to the category "Mask" and a specific part object (e.g., burgonet) that belongs to the category "Head" are set together as elements of the model object (see FIG. 4), the category "Head" is stored in advance as the designation information of the part object "Venetian mask".

As illustrated in FIG. 4, the designation information "NULL" is stored for the part object "samurai helmet" that belongs to the category "Head". Specifically, the part object that can be set together with a part object that belongs to any category has the designation information "NULL".

In this embodiment, when the designation information that designates a category of a part object that has already been set as an element of the model object has been stored in association with a selected part object and the designation information that designates the category of the selected part object has been stored in association with the already-set part object, the selected part object is set as an element of the model object in place of the part object that has been set as an element of the model object or the part object that has been set as an element of the model object is maintained as an element of the model object.

Specifically, when the designation information that designates a category of the part object that has already been set as an element of the model object has been stored in association with a selected part object and the designation information that designates the category of the selected part object has been stored in association with the already-set part object, it is prevented to set the selected part object together with the part object that has been set on the model object.

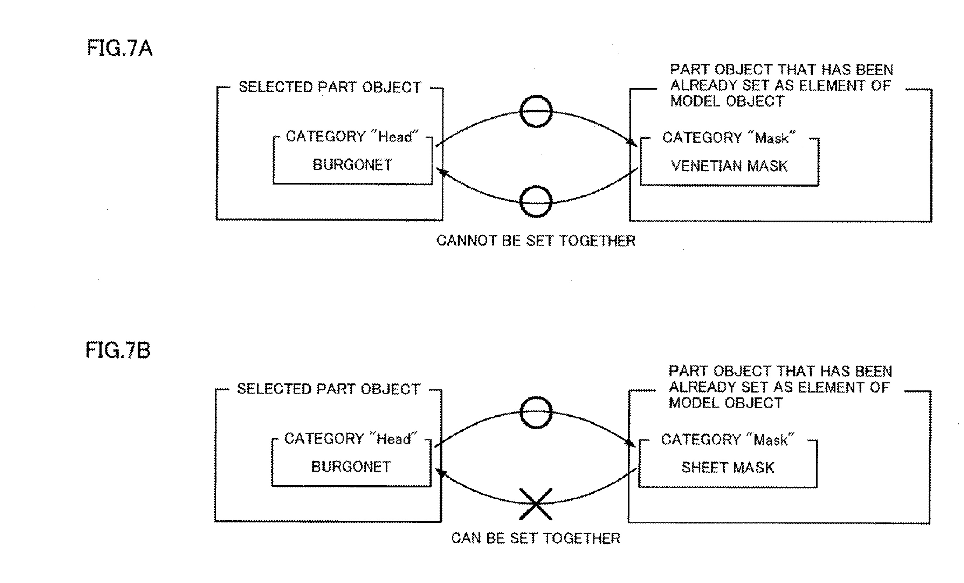

The details are described below with reference to FIG. 7A. For example, the designation information that designates the category "Head" is stored in association with the part object "Venetian mask" belonging to the category "Mask", and the part object "Venetian mask" has been set as an element of the model object. The designation information that designates the category "Mask" is stored in association with the part object "burgonet" belonging to the category "Head", and the part object "burgonet" has been selected.

In this embodiment, the designation information set in association with the selected part object is checked. For example, when the designation information set in association with the selected part object is "NULL" (i.e., the designation information is not stored), the selected part object is set as an element of the model object.

On the other hand, when the designation information set in association with the selected part object is not "NULL", whether or not the part object that belongs to the category designated by the designation information has been set as an element of the model object is determined. For example, whether or not the part object that belongs to the category "Mask" designated by the designation information of the selected part object "burgonet" has been set as an element of the model object is determined, as illustrated in FIG. 7A.

When the part object that belongs to the category designated by the designation information of the selected part object has not been set as an element of the model object, the selected part object is set as an element of the model object.

When the part object that belongs to the category designated by the designation information of the selected part object has been set as an element of the model object, the designation information of the part object that has been set as an element of the model object is checked. For example, when the part object "Venetian mask" that belongs to the category "Mask" designated by the designation information of the selected part object "burgonet" has been set as an element of the model object (see FIG. 7A), the designation information of the part object "Venetian mask" is checked.

Whether or not the designation information of the part object that belongs to the category designated by the designation information of the selected part object designates the category of the selected part object is then determined. In the example illustrated in FIG. 7A, whether or not the designation information of the part object "Venetian mask" designates the category "Head" of the selected part object "burgonet" is determined.

When the designation information of the part object that belongs to the category designated by the designation information of the selected part object designates the category of the selected part object, the selected part object cannot be set together with the part object that belongs to the category designated by the designation information of the selected part object as elements of the model object. In the example illustrated in FIG. 7A, since the designation information of the part object "Venetian mask" that belongs to the category "Mask" designated by the designation information of the selected part object "burgonet" designates the category "Head", the part object "burgonet" cannot be set together with the part object "Venetian mask" as elements of the model object. Specifically, the selected part object cannot be set together with the part object that has been set as an element of the model object as elements of the model object when the category of the selected part object is designated by the designation information of the part object that has been set as an element of the model object and the category of the part object that has been set as an element of the model object is designated by the designation information of the selected part object.

In this embodiment, when the selected part object cannot be set together with the part object that belongs to the category designated by the designation information of the selected part object as elements of the model object, the display section 190 displays an image that prompts the player to select either the selected part object or the part object that belongs to the category designated by the designation information of the selected part object as an element of the model object, and selection of the part object is received based on the information input by the player. The part object selected by the player is then set as an element of the model object. In the example illustrated in FIG. 7A, when the player has selected the part object "Venetian mask", the part object "Venetian mask" is maintained as an element of the model object. On the other hand, when the player has selected the part object "burgonet", the part object "Venetian mask" is removed or deleted from elements of the model object, and the part object "burgonet" is set in addition to other part objects that have been set as elements of the model object. Specifically, when the player has selected the part object "burgonet", the part object "burgonet" is set as an element of the model object in place of the part object "Venetian mask".

When the designation information of the part object that belongs to the category designated by the designation information of the selected part object does not indicate the category of the selected part object, the selected part object can be set together with the part object that belongs to the category designated by the designation information of the selected part object as elements of the model object. Therefore, the selected part object is set as an element of the model object. Specifically, the selected part object is set as a new element of the model object.

For example, the part object "sheet mask" that belongs to the category "Mask" has been set as an element of the model object, and the designation information of the part object "sheet mask" designates the category "Neck", as illustrated in FIG. 7B. Specifically, the designation information of the part object "sheet mask" does not indicate the category "Head". In this case, when the player has selected the part object "burgonet", the part object "burgonet" can be set together with the part object "sheet mask" as elements of the model object since the designation information of the part object "sheet mask" does not indicate the category "Head". Specifically, since the category of the part object "sheet mask" is not designated by the designation information of the part object "burgonet" and the category of the part object "burgonet" is not designated by the designation information of the part object "sheet mask", the part object "burgonet" can be set together with the part object "sheet mask" as elements of the model object.

According to the above configuration, a variation in combination of the part objects can be increased as much as possible while excluding the combination of the part objects that may result in a strange image so that the player can customize the model object in various ways.

3-3. Process performed when a plurality of categories are designated by designation information

In this embodiment, when the designation information of the selected part object designates a plurality of categories, whether or not each part object that belongs to each of the categories designated by the designation information of the selected part object has been set as an element of the model object is determined. When a part object that belongs to one of the designated categories has been set as an element of the model object, whether or not the designation information of the part object that belongs to one of the designated categories designates the category of the selected part object is determined.

When the designation information of a part object that belongs to at least one of the plurality of categories designated by the designation information of the selected part object designates the category of the selected part object, it is determined that the selected part object cannot be set together with the part object having the designation information designating the category of the selected part object as elements of the model object.

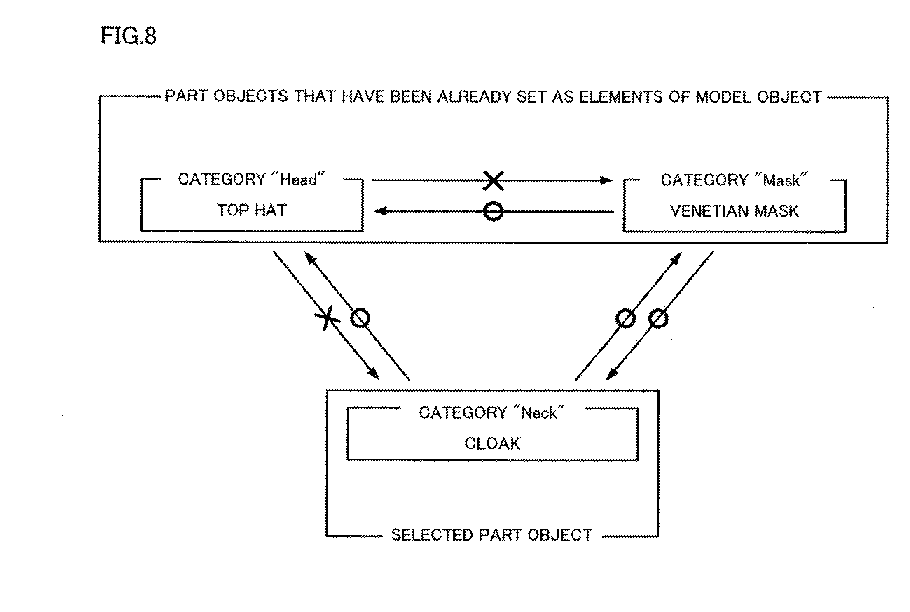

FIG. 8 illustrates an example in which the selected part object is the part object "cloak" that belongs to the category "Neck". The part object "top hat" that belongs to the category "Head" that is one of the categories designated by the designation information of the part object "cloak" has already been set as an element of the model object. The designation information of the part object "top hat" does not indicate the category "Neck" of the selected part object.

The part object "Venetian mask" that belongs to the category "Mask" that is one of the categories designated by the designation information of the part object "cloak" has already been set as an element of the model object. The designation information of the part object "Venetian mask" designates the category "Neck" of the selected part object.

In this case, since the selected part object "cloak" cannot be set together with the part object "Venetian mask" as elements of the model object, the display section 190 displays an image that prompts the player to select either the part object "cloak" or the part object "Venetian mask" as an element of the model object. Selection of the part object "cloak" or the part object "Venetian mask" is received based on the information input by the player, and the part object selected by the player is set as an element of the model object.

4. Process according to this embodiment

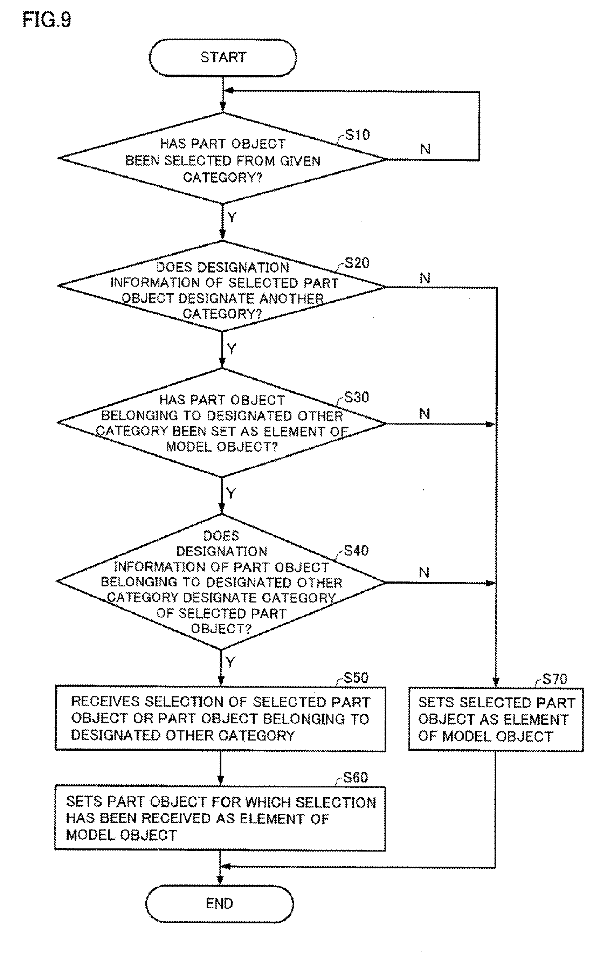

The process according to this embodiment is described below with reference to FIG. 9.

Whether or not the part object has been selected from a given category is determined (step S10). When the part object has been selected from the given category (Y in step S10), whether or not the designation information of the selected part object designates another category is determined (step S20). When the designation information of the selected part object designates another category (Y in step S20), whether or not the part object that belongs to the category designated by the designation information of the selected part object has been set as an element of the model object is determined (step S30). When the part object that belongs to the category designated by the designation information of the selected part object has been set as an element of the model object (Y in step S30), whether or not the designation information of the part object that belongs to the category designated by the designation information of the selected part object designates the category of the selected part object is determined (step S40). When the designation information of the part object that belongs to the category designated by the designation information of the selected part object designates the category of the selected part object (Y in step S40), selection of the selected part object or the part object that belongs to the category designated by the designation information of the selected part object is received (step S50). The part object for which selection has been received is then set as an element of the model object (step S60).

When the determination result in the step S20, S30, or S40 is "N", the selected part object is set as an element of the model object (step S70). The process is thus completed.

Although only some embodiments of this invention have been described in detail above, those skilled in the art will readily appreciate that many modifications are possible in the embodiments without materially departing from the novel teachings and advantages of this invention. Accordingly, all such modifications are intended to be included within the scope of the invention.

**Claims**

1. An image generation device that generates an image of a model object formed by a plurality of part objects, the image generation device comprising:

   a storage section that stores the plurality of part objects, each of the plurality of part objects being classified into one of a plurality of categories;
   a reception section that receives selection of a part object among the plurality of part objects for each of the plurality of categories;
   a setting section that sets the selected part object as an element of the model object; and
   a drawing section that generates the image of the model object, the storage section storing a category that differs from a category of a given part object among the plurality of part objects as designation information of the given part object; and
   when a category of a specific part object that has been already set as an element of the model object has been stored as the designation information of the selected part object and a category of the selected part object has been stored as the designation information of the specific part object, the setting section setting the selected part object as an element of the model object in place of the specific part object, or restricting setting of the selected part object.

2. The image generation device as defined in claim 1, wherein, when categories of a plurality of specific part objects have been stored as the designation information of the selected part object and the category of the selected part object has been stored as the designation information of one specific part object among the plurality of specific part objects, the setting section sets the selected part object as an element of the model object in place of the specific part object among the plurality of specific part objects, or restricts setting of the selected part object.

3. An image generation method that generates an image of a model object formed by a plurality of part objects, the image generation method, performed by an image generation device having a processor, comprising:

   storing the plurality of part objects, each of the plurality of part objects being classified into one of a plurality of categories;
   receiving selection of a part object among the plurality of part objects for each of the plurality of categories;
   setting the selected part object as an element of the model object;

generating the image of the model object;

storing a category that differs from a category of a given part object among the plurality of part objects as designation information of the given part object; and

when a category of a specific part object that has been already set as an element of the model object has been stored as the designation information of the selected part object and a category of the selected part object has been stored as the designation information of the specific part object, setting the selected part object as an element of the model object in place of the specific part object, or restricting setting of the selected part object.

FIG.1

PROCESSING ⟋100

OBJECT SPACE SETTING ⟋110

MOVEMENT/MOTION PROCESSING ⟋111

VIRTUAL CAMERA CONTROL ⟋112

RECEPTION ⟋113

SETTING ⟋114

SLOT STATE UPDATE ⟋115

MODEL OBJECT DATA UPDATE ⟋116

DRAWING ⟋120

GEOMETRIC PROCESSING ⟋122

SHADING PROCESSING ⟋124

ALPHA BLENDING ⟋126

HIDDEN SURFACE REMOVAL ⟋128

SOUND GENERATION ⟋130

STORAGE ⟋170

MAIN STORAGE ⟋171

IMAGE BUFFER ⟋173

Z-BUFFER ⟋175

SLOT STATE DATA STORAGE ⟋177

OBJECT DATA STORAGE ⟋179

MODEL OBJECT DATA STORAGE ⟋179a

PART OBJECT DATA STORAGE ⟋179b

OPERATION ⟋160

INFORMATION STORAGE MEDIUM ⟋180

DISPLAY ⟋190

SOUND OUTPUT ⟋192

COMMUNICATION ⟋196

EP 2 158 950 A2

FIG. 2

FIG. 3

## FIG. 4

| CATEGORY | PRIORITY INFORMATION | PART OBJECT | DESIGNATION INFORMATION | SLOT | (SLOT-UNIT) PART OBJECT DATA |
|---|---|---|---|---|---|
| Head | 5 | SAMURAI HELMET | NULL | A1 | Head_A1_1 |
| | | TOP HAT | NULL | A1 | Head_A1_2 |
| | | BURGONET | MASK | A1 | Head_A1_3 |
| | | ⋮ | ⋮ | ⋮ | ⋮ |
| Mask | 4 | VENETIAN MASK | Head, Neck | A2 | Mask_A2_1 |
| | | SHEET MASK | Neck | A2 | Mask_A2_2 |
| | | ⋮ | ⋮ | ⋮ | ⋮ |
| Neck | 13 | CLOAK | Head, Mask | A3 | Neck_A3_1 |
| | | ⋮ | ⋮ | ⋮ | ⋮ |
| Inner | 9 | T-SHIRT | NULL | A3 | Inner_A3_1 |
| | | | | A4 | Inner_A4_1 |
| | | | | A8 | Inner_A8_1 |
| | | | | A9 | Inner_A9_1 |
| | | ⋮ | ⋮ | ⋮ | ⋮ |

FIG. 5

ALL

Head

Mask

Neck

Shoulder

Inner

Upper

Arm

Head

**SAMURAI HELMET**

POWER SKILL 10

IMPACT SKILL 20

**BURGONET**

POWER SKILL 20

IMPACT SKILL 25

**TOP HAT**

POWER SKILL 5

IMPACT SKILL 5

FIG.6A

VENETIAN MASK

FIG.6B

BURGONET

FIG.6C

BURGONET

VENETIAN MASK

## FIG.7A

SELECTED PART OBJECT

CATEGORY "Head"

BURGONET

PART OBJECT THAT HAS BEEN ALREADY SET AS ELEMENT OF MODEL OBJECT

CATEGORY "Mask"

VENETIAN MASK

CANNOT BE SET TOGETHER

## FIG.7B

SELECTED PART OBJECT

CATEGORY "Head"

BURGONET

PART OBJECT THAT HAS BEEN ALREADY SET AS ELEMENT OF MODEL OBJECT

CATEGORY "Mask"

SHEET MASK

CAN BE SET TOGETHER

EP 2 158 950 A2

FIG.8

┌──────── PART OBJECTS THAT HAVE BEEN ALREADY SET AS ELEMENTS OF MODEL OBJECT ────────┐

CATEGORY "Head"          ✕ →          CATEGORY "Mask"
TOP HAT               ← ○             VENETIAN MASK

CATEGORY "Neck"
CLOAK

──── SELECTED PART OBJECT ────

EP 2 158 950 A2

FIG.9

START

S10 — HAS PART OBJECT BEEN SELECTED FROM GIVEN CATEGORY?  → N

Y

S20 — DOES DESIGNATION INFORMATION OF SELECTED PART OBJECT DESIGNATE ANOTHER CATEGORY?  → N

Y

S30 — HAS PART OBJECT BELONGING TO DESIGNATED OTHER CATEGORY BEEN SET AS ELEMENT OF MODEL OBJECT?  → N

Y

S40 — DOES DESIGNATION INFORMATION OF PART OBJECT BELONGING TO DESIGNATED OTHER CATEGORY DESIGNATE CATEGORY OF SELECTED PART OBJECT?  → N

Y

S50 — RECEIVES SELECTION OF SELECTED PART OBJECT OR PART OBJECT BELONGING TO DESIGNATED OTHER CATEGORY

S70 — SETS SELECTED PART OBJECT AS ELEMENT OF MODEL OBJECT

S60 — SETS PART OBJECT FOR WHICH SELECTION HAS BEEN RECEIVED AS ELEMENT OF MODEL OBJECT

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006268406 A